# EUROPEAN PATENT APPLICATION

(11) **EP 4 738 038 A1**
(43) Date of publication of application: **06.05.2026**
(21) Application number: 24210523.7
(22) Date of filing: 04.11.2024
(51) Int. Cl.: G05B 23/02

(54) **SYSTEMS AND METHODS TO PREDICT ASSET STATUS**

(71) Applicant: SABIC Global Technologies B.V., 4612 PX Bergen op Zoom (NL)
(72) Inventor: Eskandarani, Mohammad, 6160 GA Geleen (NL); Alabas, Yasir, 6160 GA Geleen (NL); Abahussain, Noura Adel, 6160 GA Geleen (NL); Alqahtani, Maram Buhayshan, 6160 GA Geleen (NL)
(74) Representative: Sabic INDIA Intellectual Property Group

(57) **Abstract**

Disclosed here are methods and systems to determine asset status in an industrial plant. Embodiments of the method may include, during operation of an asset positioned at the industrial plant and, iteratively, at each of a plurality of selected time intervals, receiving a plurality of data streams from sensors or devices of the asset. The method may include determining, based on application of each of the plurality of pre-processed data streams received to each of a plurality of trained machine learning models, anomaly scores. The method may include determining, via a plurality of votes based on the anomaly scores, a status for the sensors and/or devices. The method may include, if the status for the sensors and/or devices for the asset indicates an anomaly for a consecutive two or more of the plurality of time intervals, generating a next action notification to indicate the anomaly and prevent unplanned downtime.

## Description

### FIELD OF DISCLOSURE

The present disclosure generally relates to systems and methods to predict or determine asset status, via a plurality of trained machine learning models, in an industrial plant at a selected time to prevent unplanned downtime.

### BACKGROUND

An industrial plant may include a variety of equipment or assets, such as compressors, pumps, valves, and/or other equipment utilized for various plant operations. The equipment or assets may run or be operated every day and for all or a substantial portion of each day. While some equipment or assets can be serviced without impacting plant production, other equipment or assets cannot be brought down, taken offline, or shut down without causing a significant impact to plant production and/or operations. If such components are, for example, shut down, such an action may cause a reduction of product output and an increase in cost associated with the loss of such product output. Further, each industrial plant may include different and/or in some examples similar equipment and, further still, each industrial plant may produce a variety of different products.

### BRIEF SUMMARY

In view of the foregoing, Applicant has recognized these problems and others in the art, and has recognized a need for enhanced systems and methods to predict or determine asset status, via a plurality of trained machine learning models, in an industrial plant at a selected time to prevent unplanned downtime.

The present disclosure generally relates to systems and methods that address the relevant issues as described above, among other issues. In particular, such systems and methods may enable prediction of potential asset failure and/or prediction of unplanned or unscheduled asset maintenance to prevent unplanned downtime. Such systems and methods may ensure that these potential failures are assessed and/or resolved before the associated asset is taken offline or shut down, as well as predicting when maintenance should occur, regardless of when maintenance is scheduled, thus ensuring that downtime is at least partially or even completely or substantially completely reduced or prevented. Further, the systems and methods may enable monitoring of all of the assets positioned within an industrial plant and/or within a plurality of industrial plants. The use of a plurality of trained machine learning models by such systems and methods ensure that such potential failures and unplanned or unscheduled maintenance are accurately determined or predicted, rather than being overlooked and/or incorrectly predicted based on the output of a single machine learning model. Further, the use of a voting mechanism and/or weights for each of the plurality of machine learning models by the systems and methods ensure a more accurate determination or prediction of such potential failures and/or unplanned or unscheduled maintenance of the assets. Further, the systems and methods described herein may generate a notification to indicate the potential failures and/or unplanned or unscheduled maintenance of assets and, in other embodiments, the systems and methods may automatically perform or initiate resolution of the potential failures and unplanned or unscheduled maintenance of the assets. The systems and methods may additionally enable optimization of the assets or, in other words, may enable maintenance or indicate potential refurbishment, maintenance, upgrade, and/or resolutions regarding the assets.

Such systems and methods may capture, acquire, or obtain data from previous or historical industrial plant operations (for example, from a database or other type of storage), and pre-process the captured data to form a pre-processed data set. Prior to utilization with live data or data captured in real-time, the systems and methods may utilize the data to train a plurality of machine learning models. The data may include a plurality of data sets associated with one or more assets positioned at a one or more plants. Each data set may include a plurality of data points corresponding to a measurement and/or other value associated with a sensor or device of one of the plurality of assets corresponding to one of a plurality of selected times. Once the data is captured, the systems and methods may include determining if any of the plurality of data sets included in the data are missing any data points (for example, missing data points based on data inclusion or lack thereof at any of the selected times that data is captured) or includes any frozen data points (for example, a data point that remains at the same value for over a selected threshold amount of times that data is captured). If the amount of missing or frozen data points exceed a selected threshold amount, then an error notification may be generated and/or the data points may be removed from a corresponding data set to ensure a full or substantially full data set is utilized for training. After removal of data points from the data sets, pre-processing may further include normalizing each of the received data sets. Further, normal ranges may be extracted from each of the data sets based on preselected thresholds. The normal ranges may ensure that the machine learning models are able to distinguish between typical operation and abnormal operation. Further, data sets that include data points that indicate abnormal operation may be included in or added to the captured data and may be marked as such (for example, marked to indicate to the machine learning model that the data indicates potential failure and/or unplanned or unscheduled maintenance. In some examples, the data received may include data from redundant components, devices, or sensors. The systems and methods may include determining whether such data sets include redundant components and, if so, determining which sensor or sensors associated with each redundant component is deviating from typical or normal operating conditions and training a machine learning model with the data sets including the data that deviates less from typical or normal operating conditions. The pre-processing may also include removing outlying data points and/or selecting a training set and testing set from the data sets for each asset. Once the data is pre-processed, the systems and methods may include, if a particular trained machine learning model is not available and/or to re-train a trained machine learning model, applying the pre-processed data to a plurality of machine learning models to generate a plurality of classifiers or trained machine learning models. In another example, the systems and methods may train varying numbers of machine learning models based on a type of asset, types of sensors and/or devices associated with an asset, and/or the amount of sensors and/or devices associated with the asset. The number of trained machine learning models for a selected asset may comprise 3, 4, 5, or even more models, each based on different algorithms.

Such systems and methods may capture data, in real-time, once the trained machine learning models are available. The real-time data may include raw sensor data corresponding to various assets, including components and/or equipment. The systems and methods may apply the raw sensor data to a plurality of corresponding machine learning models based on the corresponding asset. The real-time data may be pre-processed, including determining if the data set is missing any data points (for example, missing data points based on data inclusion or lack thereof at any of the selected times that data is captured) or includes any frozen data points (for example, a data point that remains at the same value for over a selected threshold amount of times that data is captured). If a data stream from the real-time captured data is missing data points or includes frozen data points then that data set or stream may be removed. Further, an error message may be generated indicating the missing data points and/or frozen data points and/or indicating inspection of the asset. In such embodiments, the data stream that is removed may not be applied to a trained machine learning model. In another embodiment, the systems and methods may remove the missing data points or frozen data points from a data stream if the missing data points or frozen data points do not exceed a selected threshold.

Application of the captured data to the trained machine learning models (and/or classifiers) may produce a probability, a number, an indicator, and/or other information to indicate a potential failure of an asset and/or to indicate whether the asset should undergo maintenance. In another embodiment, the output of the model may include an anomaly score and a type of anomaly. In another embodiment, the anomaly score may be based on the value output by the trained machine learning models. In embodiments, each data stream corresponding to sensors and devices of an asset may be applied to a plurality of the trained machine learning models. The systems and methods may then generate or determine a vote for each trained machine learning models based on the output of the trained machine learning model and, in some embodiments, based on the type of trained machined learning model, a weight associated with the trained machine learning model, the anomaly score, and/or the anomaly type. Further, the weight associated with the trained machine learning model may be determined based on the accuracy of the corresponding trained machine learning model. The accuracy may be determined based on testing the trained machine learning model. The systems and methods may determine, based on these votes, a predicted status of each sensor or device of the asset at the industrial plant, the predicted status indicating potential failure and/or unplanned or unscheduled maintenance. Using the status of each sensor or device, the systems and methods may determine an overall status for the corresponding asset. Based on the status of an asset, the systems and methods may include generating a notification indicating potential failure and/or unplanned maintenance. In other words, the notification may be utilized to determine whether an asset undergo maintenance and/or whether the asset may experience a failure after a selected time frame or time period. In other embodiments, the systems and methods may automatically perform the maintenance or other remedial action.

Thus, by utilizing the systems and methods described, a user may quickly diagnose and/or be alerted of a current and/or impending maintenance cycle or equipment failure, among other anomalies. Further, in some embodiments, such issues or anomalies may be resolved automatically.

Accordingly, an embodiment of the disclosure is directed to a method for predicting asset status in an industrial plant at a selected time to prevent unplanned downtime. Such a method may be executed or performed during operation of an asset positioned at the industrial plant. Further, the method may be iterative and additionally executed at each of a plurality of selected time intervals. The method may include receiving a plurality of data streams from one or more of (i) sensors or (ii) devices that correspond to the asset. Each of the plurality of data streams may correspond to one of a plurality of components of the asset or one of a plurality of processes associated with the asset. The method may include pre-processing each of the plurality of data streams to form a plurality of pre-processed data streams. The method may include determining, based on application of each of the plurality of pre-processed data streams received to each of three or more trained machine learning models, (a) a plurality of anomaly scores and (b) a type of anomaly. The method may include determining, via a plurality of votes based on each of the plurality of anomaly scores and corresponding type of anomaly, a status for each of (i) the sensors and (ii) devices that correspond to one or more of the plurality of data streams. The method may include determining a status for the asset based on the status for each of the (i) sensors and (ii) devices. The method may include, if the status for the asset indicates an anomaly for a consecutive two or more of the plurality of selected time intervals, generating a next action notification to indicate the anomaly and prevent unplanned downtime.

In an embodiment, each of the plurality of votes may correspond to one of the three or more trained machine learning models. Each of the plurality of votes may include a weight or may be weighted based on an accuracy of a corresponding model. In another embodiment, the next action notification may further includes one of a predicted asset failure or predicted maintenance of the asset.

In an embodiment, pre-processing the plurality of data streams may include determining if any one of the plurality of data streams includes missing data points or frozen data points. Pre-processing the data streams may further include, in response to a determination that any one of the plurality of data streams includes the missing data points or the frozen data points, (1) preventing application of one of the plurality of data streams that includes the missing data points or the frozen data points, and (2) generating an error notification including indication of an error associated with one of the (i) sensors or (ii) devices.

In an embodiment, each of the three or more trained machine learning models may comprise one of a clustering model, a Gaussian mixture model, a time series trend model, an auto encoder model, or a support vector machine.

In another embodiment, training each of three or more trained machine learning models may comprise determining an amount of missing data points and amount of frozen data points in each data stream of a plurality of historical data streams that correspond to operation of the plurality of components of the asset and the plurality of processes related to the asset during normal operation. Training may further include, in response to determination that the amount of missing data points and the frozen data points exceed a second selected threshold, removing a corresponding data stream. Training may include, in response to determination that the amount of missing data points and the frozen data points do not exceed the second selected threshold, replacing the missing data points and the frozen data points from each of the plurality of historical data streams based on a linear interpolation algorithm. Training may include normalizing each of the plurality of historical data streams to form a plurality of normalized historical data streams. Training may include removing data points corresponding to an offline state and a start-up state from the plurality of normalized historical data streams to form a plurality of pre-processed historical data streams. Training may include extracting normal ranges from the plurality of pre-processed historical data streams. Training may include determining a standard deviation for two or more data streams of the plurality of pre-processed historical data streams that correspond to redundant components. Training may include removing one of the two or more data streams based on a higher determined standard deviation for the one of the two or more data streams. Training may finally include training each of or more machine learning models with the pre-processed plurality of historical data streams to form each of the three or more trained machine learning models.

In an embodiment, the method may further include determining one or more influencing features based on the anomaly score associated with each of the (i) sensors and (ii) devices. The one or more influencing features may be included in the next action notification.

Another embodiment of the disclosure is directed to a system for predicting asset status in an industrial plant at a selected time to prevent unplanned downtime. The system may include communications circuitry configured to obtain, during operation of an asset positioned at the industrial plant and at each of a plurality of selected time intervals, a plurality of data streams from one or more of (i) sensors or (ii) devices associated with the asset. The system may include a modeling circuitry configured to determine (a) a plurality of anomaly scores and (b) a type of anomaly for each of the plurality of data streams based on application of each of the plurality of data streams to each of a plurality of trained machine learning models. The system may include an asset status circuitry configured to determine a vote associated with each of the plurality of trained machine learning models for each of the plurality of data streams based on a corresponding anomaly score of the plurality of anomaly scores and the type of anomaly. The asset status circuitry may further be configured to determine a status for the asset based on votes associated with each of the plurality of trained machine learning models. The asset status circuitry may further be configured to, if the status for the asset indicates an anomaly for a consecutive two or more of the plurality of selected time intervals, generate a next action notification to indicate the anomaly and prevent unplanned downtime.

The system may further include a pre-processing circuitry. The pre-processing circuitry may be configured to determine if any one of the plurality of data streams includes missing data points or frozen data points. The pre-processing circuitry may be configured to, in response to a determination that any one of the plurality of data streams includes the missing data points or the frozen data points, generate an error notification including indication of an error associated with one of the (i) sensors or (ii) devices.

In an embodiment, the vote associated with each of the plurality of trained machine learning models for each of the plurality of data streams may further be based on a type of trained machine learning model.

In another embodiment, the asset status circuitry may further be configured to determine, based on (a) the plurality of anomaly scores and (b) the type of anomaly for each of the plurality of data streams and for each of the plurality of anomaly scores, an influencing feature. In such embodiments, the next action notification may include a selected amount of indicated anomalies and corresponding influencing features.

In an embodiment, the vote associated with each of the plurality of trained machine learning models for each of the plurality of data streams may further be based on a weight associated with a corresponding trained machine learning model. The weight associated with the corresponding trained machine learning model may be based on a type of the corresponding trained machine learning model.

Another embodiment of the disclosure is directed to a computing device for predicting asset status in an industrial plant at a selected time to prevent unplanned downtime. The computing device may include a plurality of inputs/outputs each in signal communication with an asset at an industrial plant, a processor, and a non-transitory machine readable storage medium storing instructions. The instructions may be configured to, when executed by the processor, obtain, during operation of an asset positioned at the industrial plant and at each of a plurality of selected time intervals, a plurality of data streams from one or more of (i) sensors or (ii) devices associated with the asset. The instructions may be configured to, when executed by the processor, determine a plurality of anomaly scores for each of the plurality of data streams based on application of each of the plurality of data streams to each of a plurality of trained machine learning models. The instructions may be configured to, when executed by the processor, determine a vote associated with each of the plurality of trained machine learning models for each of the plurality of data streams based on a corresponding anomaly score of the plurality of anomaly scores. The instructions may be configured to, when executed by the processor, determine a status for the asset based on votes associated with each of the plurality of trained machine learning models. The instructions may be configured to, when executed by the processor, if the status for the asset indicates an anomaly for a consecutive two or more of the plurality of time intervals, generate a next action notification to indicate the anomaly and prevent unplanned downtime. In an embodiment, the next action notification may include a type of maintenance to perform on the asset and a selected timeline to complete the type of maintenance to prevent unplanned downtime

Additional and/or alternative objects, features and advantages of the present disclosure will become apparent to the skilled artisan from the figures, detailed description, and examples herein. Applicant notes, however, that the figures, detailed description, and examples, while indicating certain embodiments of the instant disclosure, are provided for illustrative purposes only and are not intended to be limiting or to imply a particular limitation. Moreover, certain changes and modifications within the spirit and scope of the disclosed technology will become apparent to those of ordinary in the relevant art from this detailed description.

### BRIEF DESCRIPTION OF THE DRAWINGS

The disclosed aspects, features and advantages of the disclosure will become better understood with regard to the following descriptions, examples, claims, and accompanying drawings. Applicant notes, however, that the drawings illustrate certain embodiments of the disclosure and should not be considered limiting with regards to the breadth and scope of the disclosure:
FIG. 1 is a schematic diagram of a system to determine and/or predict asset status at an industrial plant, in accordance with certain embodiments of the present disclosure;
FIG. 2 is another schematic diagram of an apparatus to determine and/or predict asset status at an industrial plant, in accordance with certain embodiments of the present disclosure;
FIG. 3 is a schematic diagram of a controller to determine and/or predict asset status at an industrial plant, in accordance with certain embodiments of the present disclosure;
FIG. 4 is a flow diagram to determine and/or predict asset status at an industrial plant, in accordance with certain embodiments of the present disclosure; and
FIG. 5 is another flow diagram to determine and/or predict asset status at an industrial plant, in accordance with certain embodiments of the present disclosure.
FIG. 6 is a flow diagram to train a model for determining and/or predicting asset status at an industrial plant, in accordance with certain embodiments of the present disclosure.

### DETAILED DESCRIPTION

So that the manner in which the features and advantages of the embodiments of the systems and methods disclosed herein, as well as others that will become apparent, may be understood in more detail, a more particular description of embodiments of systems and methods briefly summarized above may be had by reference to the following detailed description of embodiments thereof, in which one or more are further illustrated in the appended drawings, which form a part of this specification. It is to be noted, however, that the drawings illustrate only various embodiments of the systems and methods disclosed herein and are therefore not to be considered limiting of the scope of the systems and methods disclosed herein as it may include other effective embodiments as well.

Applicant has recognized these problems and others in the art, and has recognized a need for enhanced systems and methods to predict asset status, via a plurality of trained machine learning models, or, in particular, enhanced systems and methods to determine an accurate and/or greater than typical prediction of asset failure and/or unplanned or unscheduled maintenance based on each output from a plurality of trained machine learning models.

Such systems and methods may enable prediction of potential asset failure and/or prediction of unplanned or unscheduled asset maintenance, as well as anomalies, to prevent downtime and/or unplanned downtime. Such systems and methods may ensure that these potential failures are assessed and/or resolved before the associated asset is taken offline or shut down, as well as predicting when maintenance should occur, regardless of when maintenance is scheduled, thus ensuring that downtime is at least partially or even completely or substantially completely reduced or prevented. Further, the systems and methods may enable monitoring of all of the assets positioned within an industrial plant and/or within a plurality of industrial plants. An industrial plant, in an example, may include a petrochemicals plant (e.g., fertilizer, chemical and/or polymer plant), metals manufacturing plant, or any other plant configured to produce products. The use of a plurality of trained machine learning models by such systems and methods ensure that such potential failures, any unplanned or unscheduled maintenance events, and/or anomalies are accurately determined or predicted, rather than being overlooked and/or incorrectly predicted based on the output of a single machine learning model. Further, the use of a voting mechanism and/or weights for each of the plurality of machine learning models for each portion of the monitored asset (in other words, for each sensor or devices associated with an asset) by the systems and methods ensure an even more accurate determination or prediction of such potential failures and/or unplanned or unscheduled maintenance events of the assets. Further, the systems and methods described herein may generate a notification to indicate the potential failures, unplanned or unscheduled maintenance events of assets, and/or anomalies and, in other embodiments, the systems and methods may automatically perform or initiate corrective actions or remedial measures for the potential failures and unplanned or unscheduled maintenance of the assets. The systems and methods may additionally enable optimization of the assets or, in other words, enable or indicate potential refurbishment, maintenance, upgrade, and/or resolutions regarding the assets prior to asset performance degradation.

Such systems and methods may capture, acquire, or obtain data from previous or historical industrial plant operations (for example, from a database or other type of storage or memory), and pre-process the captured data to form a pre-processed data set. Prior to utilization of the systems and methods with live data or data captured in real-time, the systems and methods may utilize the data to train a plurality of machine learning models. In embodiments, the data may include a plurality of data sets associated with one or more assets positioned at one or more plants. Each data set may include a plurality of data points corresponding to a measurement and/or other value associated with a sensor or device of one of the plurality of assets corresponding to one of a plurality of selected times. Additionally, each data set may include an action that was or may be performed to place a corresponding asset in a working condition or within an optimal or functioning range. Other data sets may include anomalies. Once the data is captured, the systems and methods may include determining if any of the plurality of data sets included in the data are missing any data points (for example, missing data points based on data inclusion or lack thereof at any of the selected times that data is captured) or includes any frozen data points (for example, a data point that remains at the same value for over a selected threshold amount of times that data is captured). If the amount of missing or frozen data points exceed a selected threshold amount, then an error notification may be generated and/or the data points may be removed from a corresponding data set to ensure a full or substantially full data set is utilized for training. After removal of data points from the data sets, the data may be further pre-processed, including normalizing each of the received data sets. Further, normal ranges may be extracted from each of the data sets based on preselected thresholds. The normal ranges may ensure that the machine learning models, once trained, are able to distinguish between typical operation and abnormal operation. Further, data sets, for training, that include data points that indicate abnormal operation or anomalies may be included in or added to the captured data and may be marked as such (for example, marked to indicate to the machine learning model that the data indicates potential failure, unplanned or unscheduled maintenance, and/or anomalies). In some examples, the data received may include data from redundant components, devices, or sensors. The systems and methods may include determining whether such data sets include redundant components and, if so, determining which sensor or sensors associated with each redundant component is deviating from typical or normal operating conditions and training a machine learning model with the data sets including the data that deviates less from typical or normal operating conditions. The pre-processing may also include removing outlying data points and/or selecting a training set and testing set from the data sets for each asset. Once the data is pre-processed, the systems and methods may include, if a particular trained machine learning model is not available and/or to re-train a trained machine learning model, applying the pre-processed data to a plurality of machine learning models to generate a plurality of classifiers or trained machine learning models.

In another example, the systems and methods may train varying numbers of machine learning models based on a type of asset, types of sensors and/or devices associated with an asset, and/or the amount of sensors and/or devices associated with the asset. The number of trained machine learning models for a selected asset may comprise 3, 4, 5, or even more models, each based on different algorithms. For example, the systems and methods may train two or more machine learning models for each of one or more sensors or devices associated with an asset. In another embodiment, the systems and methods may include training a different number of machine learning models for each of the one or more sensors or devices. In such embodiments, the systems and methods may include training an amount of machine learning models and utilizing a selected number of those trained machine learning models based on an accuracy of those models (for example, the accuracy being determined during training).

Such systems and methods may capture data, in real-time, once the trained machine learning models are available. The real-time data may include raw sensor data corresponding to various assets, including components and/or equipment. The systems and methods may apply the raw sensor data to a plurality of corresponding machine learning models based on the corresponding asset. The real-time data may be pre-processed, including determining if the data set is missing any data points (for example, missing data points based on data inclusion or lack thereof at any of the selected times that data is captured) or includes any frozen data points (for example, a data point that remains at the same value for over a selected threshold amount of times that data is captured). If a data stream from the real-time captured data is missing data points or includes frozen data points then that data set or stream may be removed. Further, an error message may be generated indicating the missing data points and/or frozen data points and/or indicating inspection of the asset. In such embodiments, the data stream that is removed may not be applied to a trained machine learning model. In another embodiment, the systems and methods may remove the missing data points or frozen data points from a data stream if the missing data points or frozen data points do not exceed a selected threshold.

Application of the captured data to the trained machine learning models (and/or classifiers) may produce a probability, a number, a score, an indicator, and/or other information to indicate a potential failure of or anomaly associated with an asset and/or to indicate whether the asset should undergo maintenance or whether other remedial actions may be performed. The systems and methods may then generate or determine a vote for each trained machine learning models based on the output of the trained machine learning model and, in some embodiments, based on the type of trained machine learning model, a weight associated with the trained machine learning model, an anomaly score (for example, based on the output of the trained machine learning models), and/or a type of anomaly. Further, the weight associated with the trained machine learning model may be determined based on the accuracy of the corresponding trained machine learning model. The accuracy may be determined based on testing the trained machine learning model. The systems and methods may determine, based on these votes, a predicted status of each sensor or device of the asset at the industrial plant, the predicted status indicating potential failure, unplanned or unscheduled maintenance, and/or an anomaly. Using the status of each sensor or device, the systems and methods may determine an overall status for the corresponding asset. Based on the status of an asset, the systems and methods may include generating a notification indicating potential failure, unplanned maintenance, and/or an anomaly. In other words, the notification may be utilized to determine whether an asset may undergo maintenance, whether the asset may experience a failure after a selected time frame or time period, and/or whether an asset is experiencing an anomaly. In other embodiments, the systems and methods may automatically perform the maintenance or other remedial action. In another embodiment, the notification may include a message indicating under-performance of a selected asset and/or a next action that may enable the asset to perform within normal or typical performance.

Thus, by utilizing the systems and methods described, a user may quickly diagnose and/or be alerted of a current and/or impending maintenance cycle or equipment failure. Further, in some embodiments, such issues may be resolved automatically. Further still, such systems and methods may enable optimization of assets by ensuring that the assets operate within a selected range of parameters.

The following definitions are provided for clarifying certain terms and phrases of the present disclosure and are in no way intended to unnecessarily or unduly limit any embodiments and aspects related thereto.

The use of the words "a" or "an" when used in conjunction with the term "comprising," "including," "containing," or "having" in the claims or the specification may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

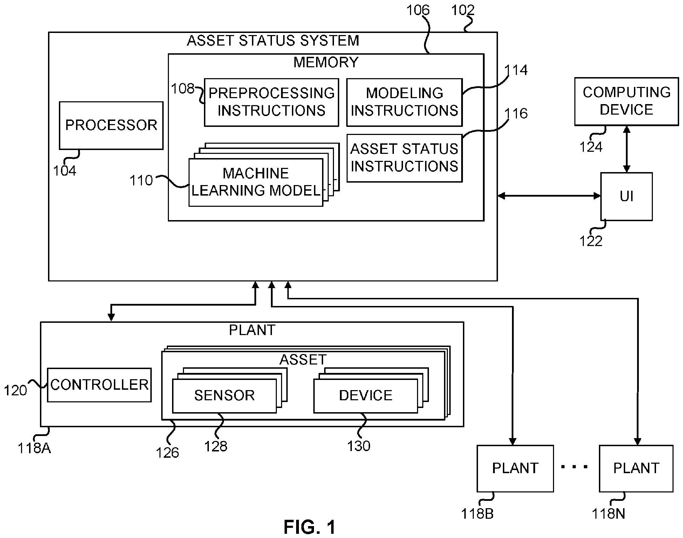

FIG. 1 is a schematic diagram of a system to determine and/or predict asset status at an industrial plant, in accordance with certain embodiments of the present disclosure. As depicted in FIG. 1, an asset status system 102 may include a processor 104 or a plurality of processors and a memory 106. The memory 106 may store instructions. Further, the asset status system 102 may connect to or be in signal communication with one or more plants 118A, 118B, and up to 118N, such as an industrial plant (e.g., a chemical plant, polymer plant, and/or manufacturing plant). Such a connection, in an embodiment, may be encrypted. In other words, data transmitted between the one or more plants 118A, 118B, and up to 118N and the asset status system 102 may be encrypted (in other words, the data may be converted into an encrypted format). The asset status system 102 may utilize an encryption algorithm including, for example, but not limited to, a symmetric encryption algorithm (for example, an Advanced Encryption System algorithm, Blowfish, Twofish, or a secure hash algorithm), an asymmetric encryption algorithm (for example, a Rivest-Shamir-Adleman (RSA) algorithm, a Diffie-Hellman algorithm, or an elliptic curve cryptography algorithm), and/or other data encryption algorithms, as will be understood by one skilled in the art. Such encryption algorithms may ensure that data transmitted remains private.

The asset status system 102 may, in another embodiment, connect to a controller 120, one or more controllers, and/or a supervisory controller positioned at each plant 118A, 118B, and up to 118N. While controller 120 is depicted as positioned in plant 118A, it will be understood that each other plant may include a controller similar to or the same as controller 120 or may include one or more controllers or supervisory controllers. The asset status system 102 may receive and/or obtain data from the plant 118A, 118B, and up to 118N via the controller 120. The asset status system 102 may also connect to a computing device 124, for example, the asset status system 102 may connect to a user's computing device (such as computing device 124) via a user interface 122. In such examples, the user may interact with the asset status system 102 via the user interface 122. The user interface 122 may include a web-based user interface or a graphical user interface (GUI).

As noted, the memory 106 may store instructions and/or various algorithms, models, and/or classifiers. In an embodiment, the instructions may include pre-processing instructions 108. In an embodiment, the asset status system 102 may, in addition to using the trained machine learning models to generate an asset status, train one or more of the machine learning models 110. For example, the asset status system 102 may receive historical data corresponding to one or more assets from one or more of the plants 118A, 118B, and up to 118N, the computing device 124, and/or from a database. The one or more assets may be equipment or components located at the industrial plants, such as compressors, pumps, reactors, burners, furnaces, heat exchangers, valves, sensors and/or other equipment and components utilized for various plant operations. In another embodiment, the asset status system 102, as noted, may include trained machine learning models (for example, the machine learning models 110 may be or may include trained machine learning models). In such embodiments, the asset status system 102 may include two or more models per one of sensors 128 and/or devices 130 of the asset 126. The sensors 128 measure some characteristic associated with the asset 125. Examples of sensors 128 associated with the asset 126 include temperature sensors, pressure sensors, strain sensors, moisture sensors, vibration sensors, and/or chemical sensors for detecting and measuring the presence of chemicals.

The device 130 may include analyzers and/or physical components associated with the asset. For example, the device may include a chemical analyzer to determine properties associated with an output of an asset. For example, the device may include a valve adjustable to varying degrees of openness or other physical components associated with the asset.

As such, to generate an asset status, the asset status system 102 may receive data from each of the plants 118A, 118B, and up to 118N in real-time. In other words, as data is generated via or during operation of chemical process or other operation, the asset status system 102 may receive that data and, further, that data may be received from a plurality of plants (for example, plants 118A, 118B, and up to 118N). The data received may comprise a plurality of data streams or data sets, each corresponding to one of the sensors 128 or devices 130. Further, the data may be captured at each of a plurality of time intervals. In another embodiment, data may be captured continuously or substantially continuously.

Prior to applying the data to a plurality of the machine learning models 110, via the modeling instructions 114, the asset status system 102 may pre-process the data via pre-processing instructions 108. Pre-processing the data may include removing noise from the data, removing outlying data points, and/or removing a data stream based on frozen or missing data points in the corresponding data stream. The pre-processing instructions 108 may remove a data stream or data set from the captured data when the amount of missing or frozen data points exceeds a selected threshold. In such examples, if a data stream is removed, the pre-processing instructions 108 may generate an error message. The message may include an indication as to which sensors 128 or devices 130 include the missing or frozen data points and, in some embodiments, a next action. The next action may include a cause and instructions describing a corrective actions or remedial measures for the cause. In an embodiment, the pre-processing instructions 108 may automatically initiate the next action.

Once the data has been pre-processed, the modeling instructions 114 may be executed. The modeling instructions 114, when executed by the processor 104, may cause each pre-processed data stream for each sensor 128 and device 130 of each asset to be applied to a plurality of corresponding machine learning models 110. Each of the plurality of corresponding machine learning models 110 may produce a number, a probability, a curve and/or chart, and/or another value or indicator that may indicate whether a particular asset may fail within a selected time, may be due for unscheduled or unplanned maintenance, and/or may include an anomaly. In other embodiments, the output of the corresponding machine learning models 110 may indicate that an asset is performing sub-optimally or may perform sub-optimally at a selected time. Such outputs may be utilized by the asset status instructions 116 to generate the asset status. For example, the asset status instructions 116 may first determine a vote for each of the machine learning models 110 for each sensor 128, device 130, groups of sensors 128, groups of devices 130, or some combination thereof associated with an asset, such as a component and/or equipment. In other words, the asset status instructions 116 may produce a plurality of votes for each sensor 128 or device 130. The asset status instructions 116 may, using the votes for a particular sensor 128 or device 130, determine a status for that sensor 128 or device 130. In an embodiment, each vote for the particular sensor 128 or device 130 may be weighted based on the corresponding trained machine learning model accuracy. In an embodiment, the asset status instructions 116 and/or the modeling instructions 114 may determine the accuracy for each of the machine learning models used for each sensor 128 or device 130. That accuracy may be determined based on testing performed during training of the machine learning models 110 and/or during subsequent use and evaluation of the trained machine learning models. In a non-limiting example, one sensor may be associated with four trained machine learning models, the weight of a particularly accurate trained machine learning model may be one and a half times more than that of the other three trained machine learning models. During voting, if two votes indicate potential failure at a selected time, while two others indicate normal operation, then the status of that sensor may be determined based on which set of two votes includes a vote from the higher weighted model. In other examples, some trained machine learning models may be given a higher or lower weight, while in others the trained machine learning models may each include the same weight. In another embodiment, the weight of the output of a machine learning model may be determined based on the type of anomaly predicted by the machine learning model. For example, a higher weight may be given to a machine learning model that detects a behavior anomaly, while a model that detects an outlier anomaly may have lower weight. In an embodiment, the status of each sensor 128 or device 130 may be determined at selected time intervals or periods (for example, about 1 minute, about 5 minutes, about 10 minutes, about 15 minutes, about 30 minutes, or even longer) or may be determined continuously or substantially continuously.

When each sensor 128 or device 130 for one of the assets 126 includes a status, then the asset status instructions 116 may determine an overall status for the asset 126 based on the status for each sensor 128 or device 130 of the asset 126. In an embodiment, the asset status instructions 116 may continuously, substantially continuously, and/or periodically determine such an overall status. The asset status instructions 116 may, if the overall status exceeds a selected threshold for an amount of subsequent determinations, generate a notification. The notification may include an indication of the status and, in addition to the status, a next step. In yet another embodiment, the asset status instructions 116 may automatically execute a process or action to perform the next step.

In some examples, the asset status system 102 may be a computing device. The term "computing device" is used herein to refer to any one or all of programmable logic controllers (PLCs), controllers, supervisory controllers, programmable automation controllers (PACs), industrial computers, servers, virtual computing devices or environments, desktop computers, personal data assistants (PDAs), laptop computers, tablet computers, smart books, palm-top computers, personal computers, smartphones, virtual computing devices, cloud based computing devices, and similar electronic devices equipped with at least a processor and any other physical components necessarily to perform the various operations described herein.

The term "server" or "server device" is used to refer to any computing device capable of functioning as a server, such as a master exchange server, web server, mail server, document server, or any other type of server. A server may be a dedicated computing device or a server module (e.g., an application) hosted by a computing device that causes the computing device to operate as a server. A server module (e.g., server application) may be a full function server module, or a light or secondary server module (e.g., light or secondary server application) that is configured to provide synchronization services among the dynamic databases on computing devices. A light server or secondary server may be a slimmed-down version of server type functionality that can be implemented on a computing device, such as a smart phone, thereby enabling it to function as an Internet server (e.g., an enterprise e-mail server) only to the extent necessary to provide the functionality described herein.

As used herein, a "non-transitory machine-readable storage medium" or "memory" may be any electronic, magnetic, optical, or other physical storage apparatus to contain or store information such as executable instructions, data, and the like. For example, any machine-readable storage medium described herein may be any of random access memory (RAM), volatile memory, nonvolatile memory, flash memory, a storage drive (e.g., hard drive), a solid state drive, any type of storage disc, and the like, or a combination thereof. The memory may store or include instructions executable by the processor.

As used herein, a "processor" or "processing circuitry" may include, for example one processor or multiple processors included in a single device or distributed across multiple computing devices. The processor (such as, processor 104 shown in FIG. 1) may be at least one of a central processing unit (CPU), a semiconductor-based microprocessor, a graphics processing unit (GPU), a field-programmable gate array (FPGA) to retrieve and execute instructions, a real time processor (RTP), other electronic circuitry suitable for the retrieval and execution instructions stored on a machine-readable storage medium, or a combination thereof.

In an embodiment, the plurality of machine learning models 110 may be a supervised or unsupervised learning model. In an embodiment, the plurality of machine learning models 110 may be based on one or more of decision trees, random forest models, random forests utilizing bagging or boosting (as in, gradient boosting), K-nearest neighbors, neural network methods, support vector machines (SVM), other supervised learning models, other semi-supervised learning models, other unsupervised learning models, or some combination thereof, as will be readily understood by one having ordinary skill in the art.

In another embodiment, the plurality of machine learning models 110 may include, at least, a clustering based anomaly detection algorithm, a Gaussian Mixture Model (GMM) algorithm, a time series trend (TST) algorithm, an Auto Encoder algorithm, and/or a SVM.

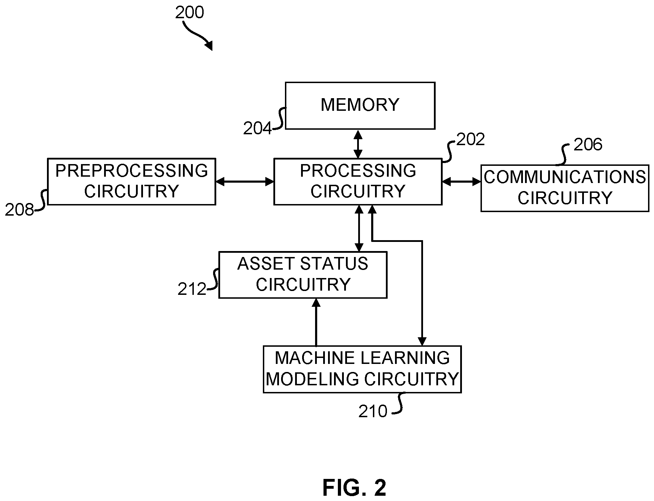

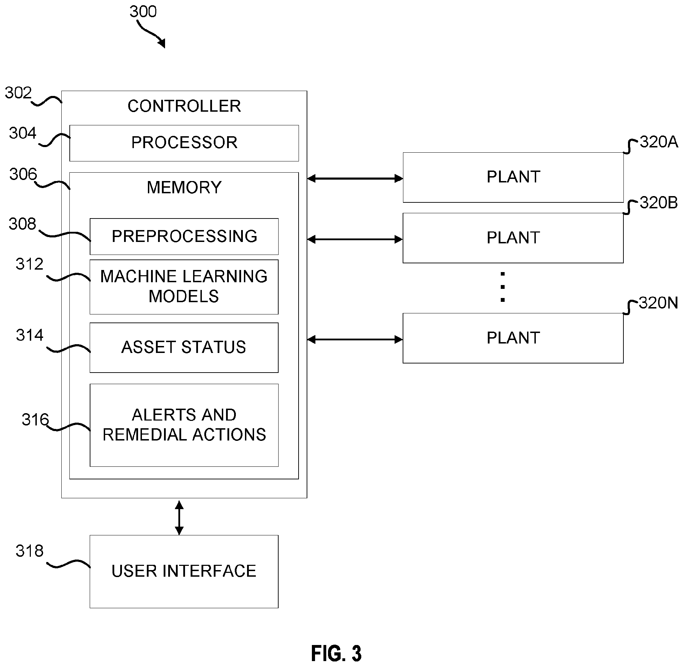

FIG. 2 is another schematic diagram of an apparatus to determine and/or predict asset status at an industrial plant, in accordance with certain embodiments of the present disclosure. Such a system may be comprised of a processing circuitry 202, a memory 204, a communications circuitry 206, a pre-processing circuitry 208, a machine learning modeling circuitry 210, and an asset status circuitry 212, each of which will be described in greater detail below. While the various components are only illustrated in FIG. 2 as being connected with processing circuitry 202, it will be understood that the apparatus 200 may further comprise a bus (not expressly shown in FIG. 2) for passing information amongst any combination of the various components of the apparatus 200. The apparatus 200 may be configured to execute various operations described herein, such as those described above in connection with FIG. 1 and below in connection with FIGS. 3-6.

The processing circuitry 202 (and/or co-processor or any other processor assisting or otherwise associated with the processor) may be in communication with the memory 204 via a bus for passing information amongst components of the apparatus. The processing circuitry 202 may be embodied in a number of different ways and may, for example, include one or more processing devices configured to perform independently. Furthermore, the processor may include one or more processors configured in tandem via a bus to enable independent execution of software instructions, pipelining, and/or multithreading.

The processing circuitry 202 may be configured to execute software instructions stored in the memory 204 or otherwise accessible to the processing circuitry 202 (e.g., software instructions stored on a separate storage device). In some cases, the processing circuitry 202 may be configured to execute hard-coded functionality. As such, whether configured by hardware or software methods, or by a combination of hardware with software, the processing circuitry 202 represents an entity (e.g., physically embodied in circuitry) capable of performing operations according to various embodiments of the present disclosure while configured accordingly. Alternatively, as another example, when the processing circuitry 202 is embodied as an executor of software instructions, the software instructions may specifically configure the processing circuitry 202 to perform the algorithms and/or operations described herein when the software instructions are executed.

Memory 204 is non-transitory and may include, for example, one or more volatile and/or nonvolatile memories. In other words, for example, the memory 204 may be an electronic storage device (e.g., a computer readable storage medium). The memory 204 may be configured to store information, data, content, applications, software instructions, or the like, for enabling the apparatus 200 to carry out various functions in accordance with example embodiments contemplated herein.

The communications circuitry 206 may be any means such as a device or circuitry embodied in either hardware or a combination of hardware and software that is configured to receive and/or transmit data from/to a network and/or any other device, circuitry, or module in communication with the apparatus 200. In this regard, the communications circuitry 206 may include, for example, a network interface for enabling communications with a wired or wireless communication network. For example, the communications circuitry 206 may include one or more network interface cards, antennas, buses, switches, routers, modems, and supporting hardware and/or software, or any other device suitable for enabling communications via a network. Furthermore, the communications circuitry 206 may include the processing circuitry 202 for causing transmission of such signals to a network or for handling receipt of signals received from a network. The communications circuitry 206, in an embodiment, may enable reception of data from each of one or more sensors and devices associated with an asset or plurality of assets (the data including, for example, one or more data streams or sets, each data stream or set corresponding to one of the assets or devices) and transmission of a notifications and/or alerts.

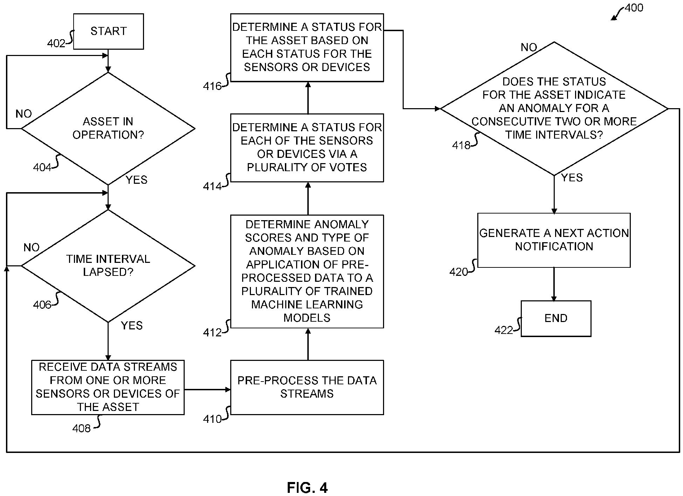

The apparatus 200 may include pre-processing circuitry 208 configured to pre-process received data. Pre-processing received data may include removing noise from the real-time data, determining whether the received data includes missing or frozen data points, removing the missing or frozen data points from each data stream, and removing a data stream if the amount of missing or frozen data points exceeds a selected threshold. The selected threshold may be based on an amount of data utilized during testing of a trained machine learning model to produce an accurate result, the accuracy being based on testing performed during the training. In another embodiment, the pre-processing circuitry 208 may normalize received data and/or, if the data is utilized for training, extract normal data ranges. The pre-processing circuitry 208 may utilize processing circuitry 202, memory 204, or any other hardware component included in the apparatus 200 to perform these operations, as described in connection with FIGS. 4 through 6 below. The pre-processing circuitry 208 may further utilize communications circuitry 206, as noted above, to gather data (such as real-time and/or historical plant data) from a variety of sources (for example, one or more different components, equipment, computing devices and/or controllers at a plant or plants; a database; and/or other data sources). The output of the pre-processing circuitry 208 may be transmitted to other circuitry of the apparatus 200 (such as the machine learning modeling circuitry 210 and/or the asset status circuitry 212).

In addition, the apparatus 200 further comprises a machine learning modeling circuitry 210. The machine learning modeling circuitry 210 may be configured to train a plurality of machine learning models and/or apply data to the plurality of trained machine learning models. The machine learning modeling circuitry 210 may receive historical data, that has been pre-processed, from, for example, the memory, communications circuitry, or the pre-processing circuitry 208. Further, the machine learning modeling circuitry 210 may be configured to utilize the historical data and a known outcome (the known outcome including, for example, normal operation or abnormal or anomalous operation) to train a plurality of machine learning models for one or more sensors and/or one or more devices corresponding to an asset. In another embodiment, the machine learning modeling circuitry 210 may apply current or real time data to the plurality of trained machine learning models. Such an application of data may produce a number, probability, predictions, simulations, and/or charts or curves. Using such an output, the apparatus 200 may determine a status indicator for each of the one or more sensors and/or one or more devices from each of the plurality of trained machine learning models, for example, via the asset status circuitry 212. The status indicator may indicate normal operation or abnormal or anomalous operation. The machine learning modeling circuitry 210 may utilize processing circuitry 202, memory 204, or any other hardware component included in the apparatus 200 to perform these operations, as described in connection with FIGS. 4 through 6 below. The machine learning modeling circuitry 210 may further utilize communications circuitry 206 to gather data (for example, pre-processed data and/or an output from one or more first principle models) from a variety of sources (such as the pre-processing circuitry 208 and/or other sources). The output of the machine learning modeling circuitry 210 may be transmitted to other circuitry of the apparatus 200, such as the asset status circuitry 212.

The apparatus 200 further comprises the asset status circuitry 212 that may determine a vote for each trained machine learning model, determine a status for each of the one or more sensors and/or one or more devices, and determine an overall asset status for an asset. The asset status circuitry 212 may determine a vote for each of the trained machine learning models utilized for each of the one or more sensors and/or one or more devices. Such a vote may be determined based on the status indicator, the type of trained machine learning model, and/or the accuracy of the trained machine learning model. Once a vote is determined, the asset status circuitry 212 may determine a status for each of the one or more sensors and/or the one or more devices, based on corresponding votes from corresponding trained machine learning models. In other words, each data stream or set for a selected sensor or device may be applied to a particular plurality of trained machine learning models, thus producing an output and then a vote for each of those trained machine learning models. The asset status circuitry 212 may then consider each vote (which may, in an embodiment, each include a different weight) and determine a status for the selected sensor or device. Once each of the one or more sensors and one or more devices include a status, the asset status circuitry 212 may determine an overall asset status based on the status for each sensor and each device. In an embodiment, each sensor and each device may be weighted based on one or more of user input or on determination by a computing device or the apparatus 200. Thus, the status for some sensors or devices may be counted more or higher than the status of other sensors or devices. The asset status circuitry 212 may generate a notice and/or next action. In an embodiment, the asset status circuitry 212 may automatically initiate the next action in the notice. The asset status circuitry 212 may utilize processing circuitry 202, memory 204, or any other hardware component included in the apparatus 200 to perform these operations, as described in connection with FIGS. 4 through 6 below. The output of the asset status circuitry 214 may be transmitted to other circuitry of the apparatus 200.

Although components 202-212 are described in part using functional language, it will be understood that the particular implementations necessarily include the use of particular hardware. It should also be understood that certain of these components 202-212 may include similar or common hardware. For example, the pre-processing circuitry 208, the machine learning modeling circuitry 210, and the asset status circuitry 212 may each at times utilize the processing circuitry 202, memory 204, or communications circuitry 206, such that duplicate hardware is not required to facilitate operation of these physical elements of the apparatus 200 (although dedicated hardware elements may be used for any of these components in some embodiments, such as those in which enhanced parallelism may be desired). Use of the terms "circuitry," with respect to elements of the apparatus therefore shall be interpreted as necessarily including the particular hardware configured to perform the functions associated with the particular element being described. Of course, while the terms "circuitry" should be understood broadly to include hardware, in some embodiments, the terms "circuitry" may in addition refer to software instructions that configure the hardware components of the apparatus 200 to perform the various functions described herein.

Although the pre-processing circuitry 208, the machine learning modeling circuitry 210, and the asset status circuitry 212 may utilize processing circuitry 202, memory 204, or communications circuitry 206 as described above, it will be understood that any of these elements of apparatus 200 may include one or more dedicated processors, specially configured field programmable gate arrays (FPGA), or application specific interface circuits (ASIC) to perform its corresponding functions, and may accordingly utilize processing circuitry 202 executing software stored in a memory or memory 204, communications circuitry 206 for enabling any functions not performed by special-purpose hardware elements. In all embodiments, however, it will be understood that the pre-processing circuitry 208, the machine learning modeling circuitry 210, and the asset status circuitry 212 are implemented via particular machinery designed for performing the functions described herein in connection with such elements of apparatus 200.

In some embodiments, various components of the apparatus 200 may be hosted remotely (e.g., by one or more cloud servers) and thus need not physically reside on the corresponding apparatus 200. Thus, some or all of the functionality described herein may be provided by third party circuitry. For example, a given apparatus 200 may access one or more third party circuitries via any sort of networked connection that facilitates transmission of data and electronic information between the apparatus 200 and the third party circuitries. In turn, that apparatus 200 may be in remote communication with one or more of the other components describe above as comprising the apparatus 200.

As will be appreciated based on this disclosure, example embodiments contemplated herein may be implemented by an apparatus 200 (or by asset status system 102 or controller 302). Furthermore, some example embodiments (such as the embodiments described for FIGS. 1 and 3) may take the form of a computer program product comprising software instructions stored on at least one non-transitory computer-readable storage medium (such as memory 204). Any suitable non-transitory computer-readable storage medium may be utilized in such embodiments, some examples of which are non-transitory hard disks, CD-ROMs, flash memory, optical storage devices, and magnetic storage devices. It should be appreciated, with respect to certain devices embodied by apparatus 200 as described in FIG. 2, that loading the software instructions onto a computing device or apparatus produces a special-purpose machine comprising the means for implementing various functions described herein.

FIG. 3 is a schematic diagram of a controller to determine and/or predict asset status at an industrial plant, in accordance with certain embodiments of the present disclosure. The controller 302 may be or include one or more controllers, a PLC, a SCADA system, and/or other components to determine an asset status for one or more assets at one or more plants in real-time. The controller 302 may include one or more processors (e.g., processor 304) to execute instructions stored in memory 306. In an example, the memory 306 may be a machine-readable storage medium.

As used herein, "signal communication" refers to electric communication such as hard wiring two components together or wireless communication, as understood by those skilled in the art. For example, wireless communication may be or include Wi-Fi^{®}, Bluetooth^{®}, ZigBee, forms of near field communications, or other wireless communication methods as will be understood by those skilled in the art. In addition, signal communication may include one or more intermediate controllers, relays, or switches disposed between elements that are in signal communication with one another.

As noted, the memory 306 may store instructions executable by the processor 304, to pre-process data, such as pre-processing instructions 308. The controller 302 may connect to and/or receive real time data from one or more of a plants 324A, 324B and up to 324N (including sensors, components, equipment, and/or controllers at the plants 324A, 324B and up to 324N). The pre-processing instructions 308 may, in response to reception of such data, be executed to pre-process the data. The pre-processing instructions 308 may, upon execution, remove noise and/or outlying data points form the real time data. The pre-processing instructions 308 may normalize data. In another embodiment, the pre-processing instructions 308 may determine the amount of missing or frozen data points in each data stream or set of the received data that corresponds to a monitored asset. If the amount of missing or frozen data point exceeds a selected threshold, then the pre-processing instructions may remove that corresponding data stream. In an embodiment, if the missing or frozen data points do not exceed the selected threshold, then the pre-processing instructions 308 may remove those missing or frozen data points from the data stream or set.

The controller 302 may include machine learning models 312 and the machine learning models may include trained machine learning models configured to provide an output upon application of data thereto. The output may include a number, probability, percentage, graph, chart, and/or other indicator. Each of the machine learning models 312 may be trained as described herein. A plurality of each of the machine learning models 312 may correspond to a sensor or device of an asset. In other words, a plurality of the machine learning models 312 may apply to or be associated with a sensor or device of the asset.

The controller 302 may include asset status instructions 314 to generate the asset status for each asset positioned at the one or more plants 320A, 320B and up to 320N. The asset status instructions 314 may apply the pre-processed data to the machine learning models 312 to generate the asset status for each asset. The asset status instructions 314 may first cause each data stream associated with a sensor or device to be applied to a corresponding plurality of the machine learning models 312. Each of the plurality of machine learning models 312 may produce a number or value indicating a status. The asset status instructions 314 may determine a vote based on that number or value, on the type of model, an accuracy of the model, and/or on a weight associated with the model. Once a sensor or device has votes for all corresponding machine learning models, the asset status instructions 314 may determine a status of the sensor or device. Once each sensor or device associated with an asset has a status, the asset status instructions 314 may determine an overall status of the asset. Such instructions may be executed periodically or continuously. The final status of the asset may be determined based on the overall status of the asset over a selected amount of time. In other words, if the overall status indicates a potential failure over a selected amount of time periods, then the asset status instructions 314 may generate a notification indicating the potential failure, corrective actions, and/or a remedial measures.

FIG. 4 is a flow diagram to determine and/or predict asset status at an industrial plant, in accordance with certain embodiments of the present disclosure. The actions of method 400 are described as occurring within controller 302. Unless otherwise specified, the actions of method 400 may also be completed within system 100 and/or apparatus 200. Specifically, method 400 may be included in one or more programs, protocols, or instructions loaded into the memory 106 of the asset status system 102 and executed on the processor 104 or one or more processors. The order in which the operations are described is not intended to be construed as a limitation, and any number of the described blocks may be combined in any order and/or in parallel to implement the methods.

At block 402, method 400 may begin. The method 400 may begin when an operation begins, such as a chemical or industrial operation. In yet another embodiment, the method 400 may be initiated mid-operation at a plant. In such embodiments, the plant may be operating on a continuous or substantially continuous basis. The method 400 may be initiated while the plant is currently operating, enabling the plant to operate more efficiently.

At block 404, a controller 302 may determine whether one or more assets are in operation. The controller 302 may perform such a determination based on an indicator provided by the asset. In another embodiment, the controller 302 may determine that an asset is operational based on power being provided to the asset.

At block 406, the controller 302 may determine whether a time interval has lapsed. In an embodiment, for a first prediction, the controller 302 may not wait for such a lapsed time interval. The time interval may comprise about 1 minute, about 5 minutes, about 10 minutes, about 15 minutes, about 30 minutes, or even longer. In embodiments, the controller 302 may obtain data from sensors and devices associated with an asset at a selected time interval based on the type of asset and/or a weight associated with the asset. In an embodiment, the time interval or selected time interval may be a value set by a user. In another embodiment, the time interval or selected time interval may be based on a time that data is received. In such embodiments, data may be received at varying time periods, while in other embodiments, data may be continuously received. Further, some data may be received continuously, while additional data may be received at varying time periods or intervals.

At block 408, after the time interval has lapsed, the controller 302 may obtain data associated with the asset, for example, from the sensors or devices.

At block 410, the controller 302 may pre-process the data stream. Pre-processing may include removing missing or frozen data points. Pre-processing may also include normalizing the data streams. In another embodiment, the controller 302 may determine an amount of missing or frozen data points in a data stream. If a selected number of data points are missing or frozen in a data stream, then that particular data stream may be removed. In such embodiments, the controller 302 may generate a notification indicating the data errors and/or including an resolution for the data errors. In such embodiments, the controller 302 may automatically initiate such a resolution. In such embodiments, a removed data stream may not be applied to any trained machine learning model. In an embodiment, such detection of missing or frozen data points may be performed based on an output from a trained machine learning model associated with such a task. Thus, the controller 302 may be able to distinguish between, for example, a data stream missing too many data points and/or frozen data being actually frozen and not a consistent measurement, thus ensuring the subsequent models provide meaningful output.

At block 412, the controller 302 may determine anomaly scores and types of anomalies based on application of each data stream to a corresponding plurality of trained machine learning models. Such an application may produce a probability, number, chart, graphic, and/or other values indicative of a status of a sensor or device associated with the asset. Such a value may be considered an anomaly score. In another embodiment, the each of the plurality of machine learning models may output a type of anomaly and the anomaly score. The plurality of machine learning models may include 2, 3, 4, 5, or even more models per sensor, device, groups of sensors, or groups of devices of each asset. In other embodiments, different combinations of data streams associated with a plurality of sensors and/or devices may be applied to a selected number of trained machine learning models.

At block 414, the status for each sensor or device may be determined based on a plurality of votes from the plurality of trained machine learning models. The controller 302 may determine such votes based on the output associated with the trained machine learning models (in other words, status indicators, anomaly scores, and/or type of anomaly) and/or based on a weight associated with the trained machine learning model. In an embodiment, some trained machine learning model votes may be weighted higher than others.

At block 414, the controller 302 may determine the status of each sensor or device based on the output of each of the plurality of trained machine learning models associated with the corresponding sensor or device. At block 416, the controller 302 may determine a status or overall status of the assets based on each status of the sensors or devices corresponding to the asset. At block 418, the controller 302 may determine whether the state has exceeded a selected threshold for a consecutive number or amount of instances that anomalies are indicated. At block 420, the controller 302 may generate a notification based on the status of the asset and/or the status of the sensors or devices associated thereto. Such a notification may include a next action. Such next steps may include corrective actions for the asset, such as (i) disabling the asset and relying on back-up assets and/or (ii) operating the assets at different operating conditions (e.g., different, lower or higher settings, power, pressure, and/or temperature). In some embodiments, the controller 302 may automatically initiate the corrective actions. Such next steps may also include a remedial action, such as guidance to (i) inspect the asset, (ii) replace the asset and/or (iii) perform preventative maintenance on the asset(s). In another embodiment, the notification may include an anomaly type. The anomaly type may include a behavioral anomaly, an outlier anomaly, or both. A behavioral anomaly may include a pattern based anomaly that is detected, for example, as a time series trend by the TST algorithm. As such an anomaly is a high indicator of issues present in the asset, the TST algorithm vote, when utilized, may be weighted higher than other models utilized. An outlier anomaly may include an anomaly that exceeds a threshold for a particular sensor or device. Each of the models described herein may detect an outlier anomaly.

At block 422, while the method 400 is shown as ending, it will be understood that such a method 400 may be performed on a periodic, continuous, or substantially continuous basis. Further, the data generated in such a method may be utilized to further train or re-train the trained machine learning models.

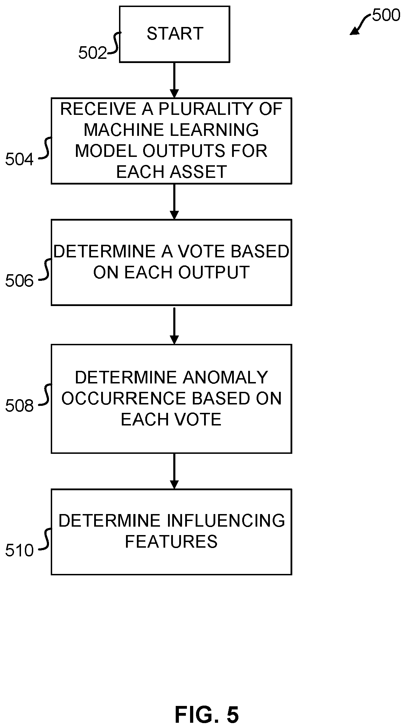

FIG. 5 is a flow diagram to determine and/or predict asset status at an industrial plant, in accordance with certain embodiments of the present disclosure. The actions of method 500 are described as occurring within controller 302. Unless otherwise specified, the actions of method 500 may also be completed within system 100 and/or apparatus 200. Specifically, method 500 may be included in one or more programs, protocols, or instructions loaded into the memory 106 of the asset status system 102 and executed on the processor 104 or one or more processors. The order in which the operations are described is not intended to be construed as a limitation, and any number of the described blocks may be combined in any order and/or in parallel to implement the methods.

At block 502, the controller 302 may start or initiate the method 500. At block 504, the controller 504 may receive a plurality of machine learning model outputs for each asset. In another embodiment, the controller 302 or a computing device may determine the output based on application of received data to corresponding machine learning models. Such an output may include a probability or prediction. Further, the output may include one or more other analysis, such as a graph or chart of the data based on some function. The output may further indicate an anomaly or a likelihood that an anomaly may occur. In such embodiments, data from one or more sensors and/or one or more devices may be applied to a corresponding machine learning model. The corresponding machine learning model may be trained using historical data from a similar or the same source as utilized when determining if an anomaly occurred.

At block 506, the controller 302 may determine a vote for each output. As noted, each vote may be weighted. Such a weight may increase or decrease based on the type of model used, the asset corresponding to the data, the one or more sensors and/or one or more devices corresponding to the data, and/or whether an anomaly has been previously detected by the same model for a selected amount of time.

At block 508, the controller 302 may determine whether an anomaly has occurred or is occurring for a selected asset based on each vote. The controller 302 may count each vote to determine whether an anomaly has occurred or is occurring. In such embodiments, each vote may be weighted differently (in other words, each vote may be greater than or less than one). If the count of votes indicating an anomaly is greater than the count of votes indicating no anomaly, then the controller 302 may determine that an anomaly has occurred. In some embodiments, if the count of votes ends in a tie, then the controller 302 may determine that an anomaly has occurred. In other embodiments, if the count of votes ends in a tie, then the controller 302 may determine that an anomaly has not occurred.

At block 510, the controller 302 may determine which features are influencing features (for example, a feature that may be considered the cause of the anomaly). The controller 302 may determine the influencing feature based on additional data output from the machine learning model. In a non-limiting example, if the machine learning model utilizes a clustering based algorithm or function for training, the influencing feature may be determined based on the feature with the highest deviation score. For example, for a cluster-based machine learning mode, if a particular sensor or data point is an outlier or deviates more than other data points, then that cluster-based machine learning model may identify that data point and corresponding sensor or device as an influencing feature. Further, a next action may include that influencing feature. In an embodiment, the controller 302 may include any influencing features with a prediction, probability, or determination of an anomaly with a next action or notification.

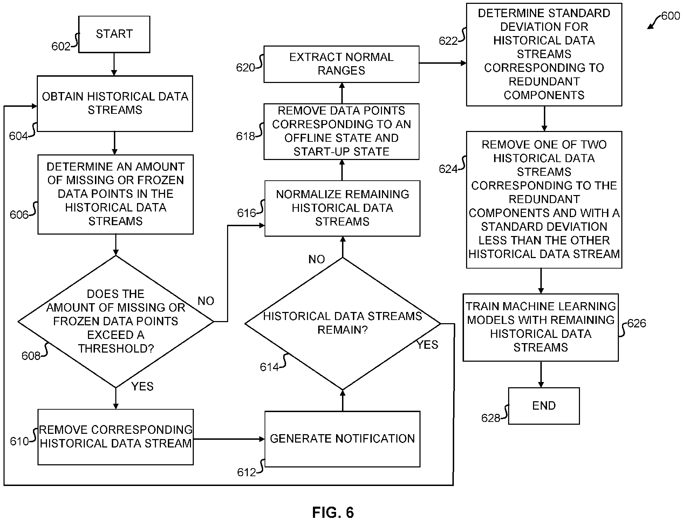

FIG. 6 is a flow diagram to train a model for determining and/or predicting asset status at an industrial plant, in accordance with certain embodiments of the present disclosure. The actions of method 600 are described as occurring within controller 302. Unless otherwise specified, the actions of method 600 may also be completed within system 100 and/or apparatus 200. Specifically, method 600 may be included in one or more programs, protocols, or instructions loaded into the memory 106 of the asset status system 102 and executed on the processor 104 or one or more processors. The order in which the operations are described is not intended to be construed as a limitation, and any number of the described blocks may be combined in any order and/or in parallel to implement the methods.

At block 602, the controller 302 may start or initiate the method 600. At block 604, the controller 302 may obtain historical data streams from or associated with a plurality of assets. At block 606, the controller 302 may determine whether any of the data streams include missing or frozen data points. At block 608, the controller 302 may determine whether the amount of missing or frozen data points exceeds a selected threshold, such as a pre-determined number of samples or time period. If such a value is not exceeded, the method 600 may continue on to block 616, otherwise the method 600 may move to block 610. At block 610, the controller 302 may remove the historical data streams with the missing or frozen data that exceeds. At block 612, the controller 302 may generate a notification indicating the asset exhibiting the error.

At block 614, the controller 302 may determine whether any historical data remains. If historical data is available, the controller 302 may continue to pre-process the remaining data streams. At block 616, the controller 302 may normalize the remaining historical data streams. At block 618, the controller 302 may remove data points corresponding to an offline state and/or start-up stated. At block 620, the controller 302 may determine or extract normal ranges.

At block 622, the controller 302 may determine if any of the data streams correspond to redundant components. If that is the case, the controller 302 may determine the standard deviation for those assets. At block 624, the controller 302 may remove a redundant stream based on that standard deviation. At block 626, the controller 302 may train the machine learning models. At block 628, the method 600 may end. It will be understood that such a method 600 may be iterative. Further, such a process may be utilized to re-train or refine any existing rained machine learning models.

While particular terms and concepts are incorporated in the present disclosure, Applicant notes that the disclosed terms and concepts are exclusively utilized in a descriptive capacity and should not therefore be construed or interpreted as limiting in any way. Certain embodiments and aspects of the disclosed systems, processes and methods have been described in detail with particular reference to the illustrated embodiments. However, it will be apparent that numerous and various modifications and alterations may be made within the spirit and scope of the embodiments of systems, processes and methods described herein, and such modifications and changes are to be considered equivalents and within the breadth and scope of the disclosure.

## Claims

1. A method for determining asset status in an industrial plant at a selected time to prevent unplanned downtime, the method comprising:
during operation of an asset positioned at the industrial plant and, iteratively, at each of a plurality of selected time intervals:
receiving a plurality of data streams from one or more of (i) sensors and/or (ii) devices that correspond to the asset, each of the plurality of data streams to correspond to one of a plurality of components of the asset or one of a plurality of processes associated with the asset;
pre-processing each of the plurality of data streams to form a plurality of pre-processed data streams;
determining, based on application of each of the plurality of pre-processed data streams received to each of three or more trained machine learning models, (a) a plurality of anomaly scores and (b) a type of anomaly;
determining, via a plurality of votes based on each of the plurality of anomaly scores and corresponding type of anomaly, a status for each of (i) the sensors and/or (ii) devices that correspond to one or more of the plurality of data streams;
determining a status for the asset based on the status for each of the (i) sensors and/or (ii) devices; and
if the status for the asset indicates an anomaly for a consecutive two or more of the plurality of selected time intervals, generating a next action notification to indicate the anomaly and prevent unplanned downtime.

2. The method of claim 1, wherein each of the plurality of votes correspond to one of the three or more trained machine learning models, and wherein each of the plurality of votes includes a weight based on an accuracy of a corresponding model.

3. The method of claim 1, wherein the next action notification further includes one of a predicted asset failure or predicted maintenance of the asset.

4. The method of claim 1, wherein pre-processing the plurality of data streams includes:
determining if any one of the plurality of data streams includes missing data points or frozen data points; and
in response to a determination that any one of the plurality of data streams includes the missing data points or the frozen data points:
preventing application of one of the plurality of data streams that includes the missing data points or the frozen data points, and
generating an error notification including indication of an error associated with one of the (i) sensors and/or (ii) devices.

5. The method of claim 1, wherein each of the three or more trained machine learning models comprise one of a clustering model, a Gaussian mixture model, a time series trend model, an auto encoder model, or a support vector machine.

6. The method of claim 1, wherein training each of three or more trained machine learning models comprises:
determining an amount of missing data points and an amount of frozen data points in each data stream of a plurality of historical data streams that correspond to operation of the plurality of components of the asset and the plurality of processes related to the asset during normal operation;
in response to a determination that the amount of missing data points and the frozen data points exceed a second selected threshold, removing a corresponding data stream;
in response to determination that the amount of missing data points and the frozen data points do not exceed the second selected threshold, replacing the missing data points and the frozen data points from each of the plurality of historical data streams based on a linear interpolation algorithm;
normalizing each of the plurality of historical data streams to form a plurality of normalized historical data streams;
removing data points corresponding to an offline state and a start-up state from the plurality of normalized historical data streams to form a plurality of pre-processed historical data streams;
extracting normal ranges from the plurality of pre-processed historical data streams;
determining deviation from operating conditions for each two or more data streams of the plurality of pre-processed historical data streams that correspond to redundant components;
removing one of the two or more data streams based on a higher determined standard deviation for the one of the two or more data streams; and
training each of or more machine learning models with the pre-processed plurality of historical data streams to form each of the three or more trained machine learning models.

7. The method of claim 1, further comprising:
determining one or more influencing features based on the anomaly score associated with each of the (i) sensors and/or (ii) devices, and wherein the one or more influencing features are included in the next action notification.

8. A system for determining asset status in an industrial plant at a selected time to prevent unplanned downtime, the system comprising:
a communications circuitry configured to:
obtain, during operation of an asset positioned at the industrial plant and at each of a plurality of selected time intervals, a plurality of data streams from one or more of (i) sensors and/or (ii) devices associated with the asset;
a modeling circuitry configured to:
determine (a) a plurality of anomaly scores and (b) a type of anomaly for each of the plurality of data streams based on application of each of the plurality of data streams to each of a plurality of trained machine learning models; and
an asset status circuitry configured to:
determine a vote associated with each of the plurality of trained machine learning models for each of the plurality of data streams based on a corresponding anomaly score of the plurality of anomaly scores and the type of anomaly,
determine a status for the asset based on votes associated with each of the plurality of trained machine learning models, and
if the status for the asset indicates an anomaly for a consecutive two or more of the plurality of selected time intervals, generate a next action notification to indicate the anomaly and prevent unplanned downtime.

9. The system of claim 8, further comprising a pre-processing circuitry configured to:
determine if any one of the plurality of data streams includes missing data points or frozen data points; and
in response to a determination that any one of the plurality of data streams includes the missing data points or the frozen data points, generate an error notification including indication of an error associated with one of the (i) sensors and/or (ii) devices.

10. The system of claim 8, wherein the vote associated with each of the plurality of trained machine learning models for each of the plurality of data streams is further based on a type of trained machine learning model.

11. The system of claim 8, wherein the asset status circuitry is further configured to
determine, based on (a) the plurality of anomaly scores and (b) the type of anomaly for each of the plurality of data streams and for each of the plurality of anomaly scores, an influencing feature, and wherein the next action notification includes a selected amount of indicated anomalies and corresponding influencing features.

12. The system of claim 8, wherein the vote associated with each of the plurality of trained machine learning models for each of the plurality of data streams is further based on a weight associated with a corresponding trained machine learning model.

13. The system of claim 12, wherein the weight associated with the corresponding trained machine learning model is based on a type of the corresponding trained machine learning model.

14. A computing device for determining asset status in an industrial plant at a selected time to prevent unplanned downtime, the computing device comprising:
a plurality of inputs/outputs each in signal communication with an asset at an industrial plant, the computing device including a processor and a non-transitory machine readable storage medium storing instructions configured to, when executed by the processor:
obtain, during operation of an asset positioned at the industrial plant and at each of a plurality of selected time intervals, a plurality of data streams from one or more of (i) sensors and/or (ii) devices associated with the asset;
determine a plurality of anomaly scores for each of the plurality of data streams based on application of each of the plurality of data streams to each of a plurality of trained machine learning models;
determine a vote associated with each of the plurality of trained machine learning models for each of the plurality of data streams based on a corresponding anomaly score of the plurality of anomaly scores;
determine a status for the asset based on votes associated with each of the plurality of trained machine learning models; and
if the status for the asset indicates an anomaly for a consecutive two or more of the plurality of time intervals, generate a next action notification to indicate the anomaly and prevent unplanned downtime.

15. The computing device of claim 14, wherein each vote comprises a weighted vote, and wherein a weight associated with the weighted vote is based on a type of machine learning model corresponding to the vote, the asset corresponding to a data stream applied to a corresponding machine learning model, one or more sensors and/or one or more devices corresponding to a data stream applied to a corresponding machine learning model, and/or whether the anomaly has been previously detected by the same model for a selected amount of time..
